# EUROPEAN PATENT APPLICATION

(11) **EP 4 604 558 A1**
(43) Date of publication of application: **20.08.2025**
(21) Application number: 25158729.1
(22) Date of filing: 19.02.2025
(51) Int. Cl.: H04N 21/44, H04N 21/4402

(54) **DISPLAY DEVICE AND METHOD FOR OPERATING SAME**

(30) Priority: 19.02.2024 KR 20240023809
(71) Applicant: LG Electronics Inc., Yeongdeungpo-gu Seoul 07336 (KR)
(72) Inventor: AHN, Seongyeol, 06772 Seoul (KR); NOH, Hyunchul, 06772 Seoul (KR); JUNG, Hyun, 06772 Seoul (KR); JOO, Hyunbin, 06772 Seoul (KR)
(74) Representative: Schornack, Oliver

(57) **Abstract**

The present disclosure relates to a display device and a method for operating the same. The display device according to an embodiment of the present disclosure may include a display unit; an external device interface unit configured to receive a video having a first frequency from a first device; and a controller configured to: determine a number of interpolation frames generated to output an original video having a first frequency as a final video having a second frequency through the display unit based on the video having the first frequency, and generate interpolation frames as many as the determined number of interpolation frames, and change the number of interpolation frames based on whether a property of the original video satisfies a condition related to a degree of motion shake.

## Description

### CROSS-REFERENCE TO RELATED APPLICATIONS

The present application claims priority under 35 U.S.C. 119 and 35 U.S.C. 365 to Korean Patent Application No. 10- 2024-0023809 (filed on February 19th, 2024), which is hereby incorporated by reference in its entirety.

### BACKGROUND

The present disclosure relates to a display device and a method for operating the same.

A video cadence can be converted into video with different frequencies when the original source video with different frequencies is displayed on the display device.

For example, a movie film usually has a frequency of 24 Hz, while a TV image (video) usually has a frequency of 60 Hz, so when a movie film is played on a display device such as a TV, a user may experience video stuttering or motion tremors during playback.

Such images (videos) have a periodic frame sequence. The display device can determine the frame rate (frequency) of the original source video from the video received from a device for receiving video such as a set-top box, and perform motion estimation/compensation to output the video naturally.

Depending on the type of video being viewed on the display device, a dynamic feeling like a movie may be required, or a smoother flow of the video may be required. Therefore, motion processing that takes this property into account may be required. In some cases, a viewer or a user can preset multiple modes according to the property of such motion processing on the display device.

For example, the mode suitable for movie is the optimal mode for watching movies, which reduces strong judder with a little motion processing while maintaining the degree of motion judder of the original movie, but depending on the brightness and degree of movement of some screens, a viewer may feel stronger judder, which may cause discomfort when watching movies.

### SUMMARY

The present disclosure is to provide a display device capable of naturally outputting a video of an image by considering the property of the image and an operating method thereof.

The present disclosure is to provide a display device capable of appropriately generating a number of interpolation frames by referring to a previous video frame pattern and an operating method thereof.

The present disclosure is to reduce visual shaking by variably adjusting the level of a shaking removal function in a scene in which shaking of motion is greatly perceived by considering the property of the image.

In an aspect, a display device according to an embodiment of the present disclosure may include a display unit; an external device interface unit configured to receive a video having a first frequency from a first device; and a controller configured to: determine a number of interpolation frames generated to output an original video having a first frequency as a final video having a second frequency through the display unit based on the video having the first frequency, and generate interpolation frames as many as the determined number of interpolation frames, and change the number of interpolation frames based on whether a property of the original video satisfies a condition related to a degree of motion shake.

In another aspect, a display device according to an embodiment of the present disclosure may include a display unit; an external device interface unit configured to receive a video having a second frequency from a first device configured to convert an original video having a first frequency to a video having a second frequency; and a controller configured to: determine a number of interpolation frames generated to output the original video having the first frequency as a final video having a third frequency through the display unit based on the video having the first frequency, and generate interpolation frames as many as the determined number of interpolation frames, and change the number of interpolation frames based on whether a property of the original video satisfies a condition related to a degree of motion shake.

In still another aspect, a method of operating a display device according to an embodiment of the present disclosure may include receiving an original video having a first frequency; determining a number of interpolation frames generated to output an original video having a first frequency as a final video having a second frequency through the display unit; generating interpolation frames as many as the determined number of interpolation frames; outputting the video including the generated interpolation frames; and changing the number of interpolation frames based on whether a property of the original video satisfies a condition related to a degree of motion shake.

### BRIEF DESCRIPTION OF THE DRAWINGS

FIG. 1 is a diagram illustrating a display device according to an embodiment of the present disclosure.
FIG. 2 is a block diagram showing a configuration of the display device of FIG. 1.
FIG. 3 is an example of an internal block diagram of the controller of FIG. 2.
FIG. 4 is a diagram illustrating a control method for a remote control device of FIG. 2.
FIG. 5 is an internal block diagram of the remote control device of FIG. 2.

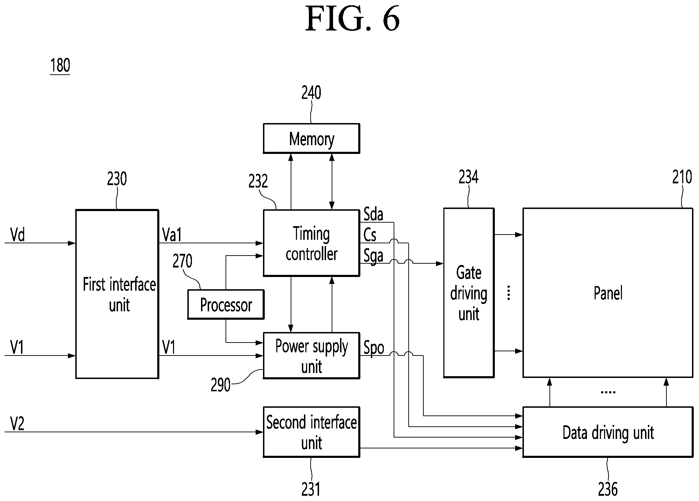

FIG. 6 is an internal block diagram of the display unit of FIG. 2.
FIG. 7 is a diagram describing a video output relationship between a first device and a display device according to an embodiment of the present disclosure.
FIG. 8 is a flowchart for describing an operation method of the display device according to an embodiment of the present disclosure.
FIGS. 9 and 10 are diagrams describing a process of obtaining a video frame pattern using SAD according to an embodiment of the present disclosure.
FIG. 11 is a diagram describing a method of generating frames through MEMC according to an embodiment of the present disclosure.
FIG. 12 is a diagram describing that the number of generated interpolation frames is different when the frequency of the original video is different.
FIG. 13 is a diagram illustrating a process of determining a frame rate of an original video and generating interpolated frames based on the frame rate according to an embodiment of the present disclosure.
FIG. 14 is a schematic diagram describing a process of changing the degree of motion shaking according to a scene by analyzing the property of a video according to one embodiment of the present disclosure.
FIG. 15 is a flowchart showing the operation process of the display device according to one embodiment of the present disclosure.
FIG. 16 is a flowchart showing the operation process of the display device according to another embodiment of the present disclosure.
FIG. 17 is a flowchart illustrating the operation process of the display device according to another embodiment of the present disclosure in more detail.
FIG. 18 is a flowchart illustrating the operation process of a display device according to one embodiment of the present disclosure.
FIG. 19 is a flowchart illustrating the operation process of a display device according to another embodiment of the present disclosure.

### DETAILED DESCRIPTION OF THE EMBODIMENTS

Hereinafter, the present disclosure will be described in more detail with reference to the drawings.

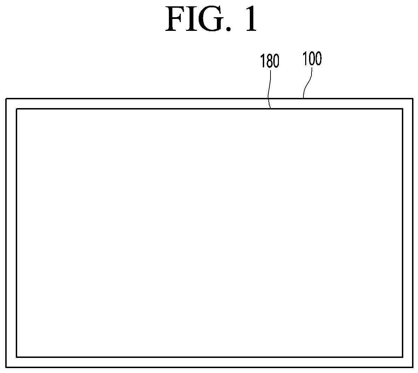

FIG. 1 is a diagram illustrating a display device according to an embodiment of the present disclosure.

Referring to the drawings, a display device 100 may include a display unit 180.

Meanwhile, the display unit 180 may be implemented with any one of various panels. For example, the display unit 180 may be any one of a liquid crystal display panel (LCD panel), an organic light emitting diode panel (OLED panel), and an inorganic light emitting diode panel (LED panel).

In the present disclosure, it is assumed that the display unit 180 includes an organic light emitting diode panel (OLED panel). It should be noted that this is only exemplary, and the display unit 180 may include a panel other than an organic light emitting diode panel (OLED panel).

Meanwhile, the display device 100 of FIG. 1 may be a monitor, a TV, a tablet PC, or a mobile terminal.

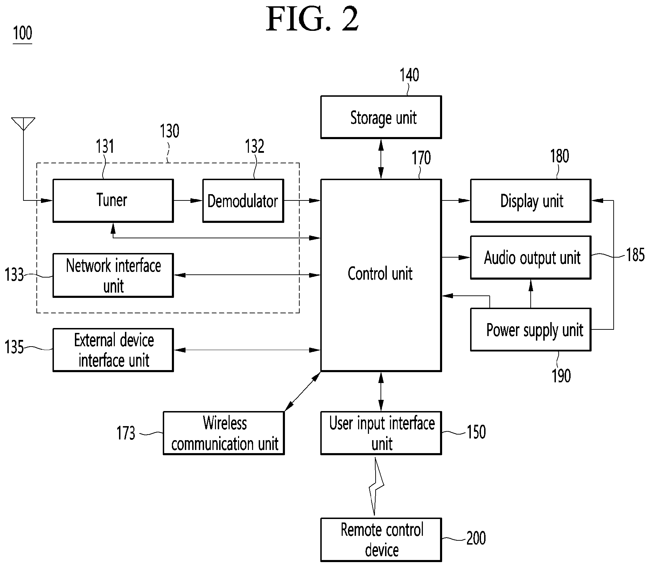

FIG. 2 is a block diagram showing a configuration of the display device of FIG. 1.

Referring to FIG. 2, the display device 100 may include a broadcast receiving unit 130, an external device interface unit 135, a storage unit 140, a user input interface unit 150, a controller 170, and a wireless communication unit 173, a display unit 180, an audio output unit 185, and a power supply unit 190.

The broadcast receiving unit 130 may include a tuner 131, a demodulator 132, and a network interface unit 133.

The tuner 131 may select a specific broadcast channel according to a channel selection command. The tuner 131 may receive a broadcast signal for the selected specific broadcast channel.

The demodulator 132 may separate the received broadcast signal into a video signal, an audio signal, and a data signal related to a broadcast program, and restore the separated video signal, audio signal, and data signal to a format capable of being output.

The network interface unit 133 may provide an interface for connecting the display device 100 to a wired/wireless network including an Internet network. The network interface unit 133 may transmit or receive data to or from other users or other electronic devices through a connected network or another network linked to the connected network.

The network interface unit 133 may access a predetermined web page through the connected network or the other network linked to the connected network. That is, it is possible to access a predetermined web page through a network, and transmit or receive data to or from a corresponding server.

In addition, the network interface unit 133 may receive content or data provided by a content provider or a network operator. That is, the network interface unit 133 may receive content such as a movie, advertisement, game, VOD, broadcast signal, and related information provided by a content provider or a network provider through a network.

In addition, the network interface unit 133 may receive update information and update files of firmware provided by the network operator, and may transmit data to an Internet or content provider or a network operator.

The network interface unit 133 may select and receive a desired application from among applications that are open to the public through a network.

The external device interface unit 135 may receive an application or a list of applications in an external device adjacent thereto, and transmit the same to the controller 170 or the storage unit 140.

The external device interface unit 135 may provide a connection path between the display device 100 and the external device. The external device interface unit 135 may receive one or more of video and audio output from an external device wirelessly or wired to the display device 100 and transmit the same to the controller 170. The external device interface unit 135 may include a plurality of external input terminals. The plurality of external input terminals may include an RGB terminal, one or more High Definition Multimedia Interface (HDMI) terminals, and a component terminal.

The video signal of the external device input through the external device interface unit 135 may be output through the display unit 180. The audio signal of the external device input through the external device interface unit 135 may be output through the audio output unit 185.

The external device connectable to the external device interface unit 135 may be any one of a set-top box, a Blu-ray player, a DVD player, a game machine, a sound bar, a smartphone, a PC, a USB memory, and a home theater, but this is only an example.

In addition, a part of content data stored in the display device 100 may be transmitted to a selected user among a selected user or a selected electronic device among other users or other electronic devices registered in advance in the display device 100.

The storage unit 140 may store programs for signal processing and control of the controller 170, and may store video, audio, or data signals, which have been subjected to signal-processed.

In addition, the storage unit 140 may perform a function for temporarily storing video, audio, or data signals input from an external device interface unit 135 or the network interface unit 133, and store information on a predetermined video through a channel storage function.

The storage unit 140 may store an application or a list of applications input from the external device interface unit 135 or the network interface unit 133.

The display device 100 may play back a content file (a moving image file, a still image file, a music file, a document file, an application file, or the like) stored in the storage unit 140 and provide the same to the user.

The user input interface unit 150 may transmit a signal input by the user to the controller 170 or a signal from the controller 170 to the user. For example, the user input interface unit 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface unit 150 may transmit a control signal input from a local key (not shown) such as a power key, a channel key, a volume key, and a setting value to the controller 170.

The video signal image-processed by the controller 170 may be input to the display unit 180 and displayed with video corresponding to a corresponding video signal. Also, the video signal image-processed by the controller 170 may be input to an external output device through the external device interface unit 135.

The audio signal processed by the controller 170 may be output to the audio output unit 185. Also, the audio signal processed by the controller 170 may be input to the external output device through the external device interface unit 135.

In addition, the controller 170 may control the overall operation of the display device 100.

In addition, the controller 170 may control the display device 100 by a user command input through the user input interface unit 150 or an internal program and connect to a network to download an application a list of applications or applications desired by the user to the display device 100.

The controller 170 may allow the channel information or the like selected by the user to be output through the display unit 180 or the audio output unit 185 along with the processed video or audio signal.

In addition, the controller 170 may output a video signal or an audio signal through the display unit 180 or the audio output unit 185, according to a command for playing back a video of an external device through the user input interface unit 150, the video signal or the audio signal being input from an external device, for example, a camera or a camcorder, through the external device interface unit 135.

Meanwhile, the controller 170 may allow the display unit 180 to display a video, for example, allow a broadcast video which is input through the tuner 131 or an external input video which is input through the external device interface unit 135, a video which is input through the network interface unit or a video which is stored in the storage unit 140 to be displayed on the display unit 180. In this case, the video displayed on the display unit 180 may be a still image or a moving image, and may be a 2D image or a 3D image.

In addition, the controller 170 may allow content stored in the display device 100, received broadcast content, or external input content input from the outside to be played back, and the content may have various forms such as a broadcast video, an external input video, an audio file, still images, accessed web screens, and document files.

The wireless communication unit 173 may communicate with an external device through wired or wireless communication. The wireless communication unit 173 may perform short range communication with an external device. To this end, the wireless communication unit 173 may support short range communication using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication unit 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication unit 173 may detect (or recognize) a wearable device capable of communication around the display device 100. Furthermore, when the detected wearable device is an authenticated device to communicate with the display device 100 according to the present disclosure, the controller 170 may transmit at least a portion of data processed by the display device 100 to the wearable device through the wireless communication unit 173. Therefore, a user of the wearable device may use data processed by the display device 100 through the wearable device.

The display unit 180 may convert a video signal, data signal, or OSD signal processed by the controller 170, or a video signal or data signal received from the external device interface unit 135 into R, G, and B signals, and generate drive signals.

Meanwhile, the display device 100 illustrated in FIG. 2 is only an embodiment of the present disclosure, and therefore, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 2, the display device 100 may receive a video through the network interface unit 133 or the external device interface unit 135 without a tuner 131 and a demodulator 132 and play back the same.

For example, the display device 100 may be divided into an image processing device, such as a set-top box, for receiving broadcast signals or content according to various network services, and a content playback device that plays back content input from the image processing device.

In this case, an operation method of the display device according to an embodiment of the present disclosure will be described below may be implemented by not only the display device 100 as described with reference to FIG. 2 and but also one of an image processing device such as the separated set-top box and a content playback device including the display unit 180 the audio output unit 185.

The audio output unit 185 may receive a signal audio-processed by the controller 170 and output the same with audio.

The power supply unit 190 may supply corresponding power to the display device 100. Particularly, power may be supplied to the controller 170 that may be implemented in the form of a system on chip (SOC), the display unit 180 for video display, and the audio output unit 185 for audio output.

Specifically, the power supply unit 190 may include a converter that converts AC power into DC power, and a dc/dc converter that converts a level of DC power.

The remote control device 200 may transmit a user input to the user input interface unit 150. To this end, the remote control device 200 may use Bluetooth, Radio Frequency (RF) communication, Infrared (IR) communication, Ultra Wideband (UWB), ZigBee, or the like. In addition, the remote control device 200 may receive a video, audio, or data signal or the like output from the user input interface unit 150, and display or output the same through the remote control device 200 by video or audio.

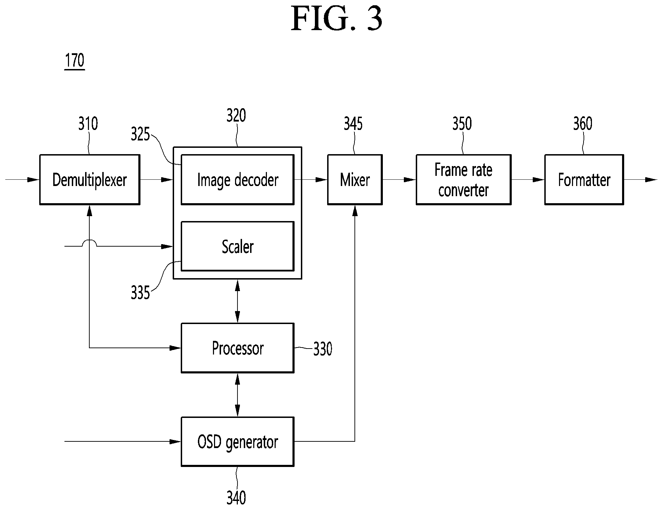

FIG. 3 is an example of an internal block diagram of the controller of FIG. 2.

Referring to the drawings, the controller 170 according to an embodiment of the present disclosure may include a demultiplexer 310, an image processing unit 320, a processor 330, an OSD generator 340, a mixer 345, a frame rate converter 350, and a formatter 360. In addition, an audio processing unit (not shown) and a data processing unit (not shown) may be further included.

The demultiplexer 310 may demultiplex input stream. For example, when MPEG-2 TS is input, the demultiplexer 310 may demultiplex the MPEG-2 TS to separate the MPEG-2 TS into video, audio, and data signals. Here, the stream signal input to the demultiplexer 310 may be a stream signal output from the tuner 131, the demodulator 132 or the external device interface unit 135.

The image processing unit 320 may perform image processing on the demultiplexed video signal. To this end, the image processing unit 320 may include an image decoder 325 and a scaler 335.

The image decoder 325 may decode the demultiplexed video signal, and the scaler 335 may scale a resolution of the decoded video signal to be output through the display unit 180.

The video decoder 325 may be provided with decoders of various standards. For example, an MPEG-2, H.264 decoder, a 3D video decoder for color images and depth images, and a decoder for multi-view images may be provided.

The processor 330 may control the overall operation of the display device 100 or of the controller 170. For example, the processor 330 may control the tuner 131 to select (tune) an RF broadcast corresponding to a channel selected by a user or a pre-stored channel.

In addition, the processor 330 may control the display device 100 by a user command input through the user input interface unit 150 or an internal program.

In addition, the processor 330 may perform data transmission control with the network interface unit 135 or the external device interface unit 135.

In addition, the processor 330 may control operations of the demultiplexer 310, the image processing unit 320, and the OSD generator 340 in the controller 170.

The OSD generator 340 may generate an OSD signal according to a user input or by itself. For example, based on a user input signal, a signal for displaying various information on a screen of the display unit 180 as a graphic or text may be generated. The generated OSD signal may include various data such as a user interface screen, various menu screens, widgets, and icons of the display device 100. In addition, the generated OSD signal may include a 2D object or a 3D object.

In addition, the OSD generator 340 may generate a pointer that may be displayed on the display unit 180 based on a pointing signal input from the remote control device 200. In particular, such a pointer may be generated by the pointing signal processing unit, and the OSD generator 340 may include such a pointing signal processing unit (not shown). Of course, the pointing signal processing unit (not shown) may be provided separately, not be provided in the OSD generator 340

The mixer 345 may mix the OSD signal generated by the OSD generator 340 and the decoded video signal image-processed by the image processing unit 320. The mixed video signal may be provided to the frame rate converter 350.

The frame rate converter (FRC) 350 may convert a frame rate of an input video. On the other hand, the frame rate converter 350 may output the input video as it is, without a separate frame rate conversion.

On the other hand, the formatter 360 may change the format of the input video signal into a video signal to be displayed on the display and output the same.

The formatter 360 may change the format of the video signal. For example, it is possible to change the format of the 3D video signal to any one of various 3D formats such as a side by side format, a top/down format, a frame sequential format, an interlaced format, a checker box and the like.

Meanwhile, the audio processing unit (not shown) in the controller 170 may perform audio processing of a demultiplexed audio signal. To this end, the audio processing unit (not shown) may include various decoders.

In addition, the audio processing unit (not shown) in the controller 170 may process a base, treble, volume control, and the like.

The data processing unit (not shown) in the controller 170 may perform data processing of the demultiplexed data signal. For example, when the demultiplexed data signal is an encoded data signal, the demultiplexed data signal may be decoded. The coded data signal may be electronic program guide information including broadcast information such as a start time and an end time of a broadcast program broadcast on each channel.

Meanwhile, a block diagram of the controller 170 illustrated in FIG. 3 is a block diagram for an embodiment of the present disclosure. The components of the block diagram may be integrated, added, or omitted depending on the specification of the controller 170 that is actually implemented.

In particular, the frame rate converter 350 and the formatter 360 may not be provided in the controller 170, and may be separately provided or separately provided as a single module.

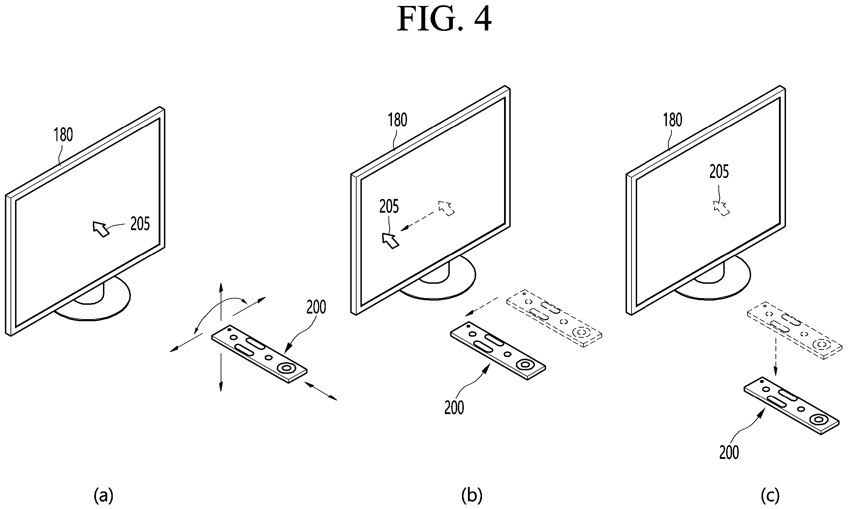

FIG. 4 is a diagram illustrating a control method for a remote control device of FIG. 2.

In (a) of FIG. 4, it is illustrated that a pointer 205 corresponding to the remote control device 200 is displayed on the display unit 180.

The user may move or rotate the remote control device 200 up and down, left and right (FIG. 4 (b)), and forward and backward ((c) of FIG. 4). The pointer 205 displayed on the display unit 180 of the display device may correspond to the movement of the remote control device 200. The remote control device 200 may be referred to as a spatial remote controller or a 3D pointing device, as the corresponding pointer 205 is moved and displayed according to the movement on a 3D space, as shown in the drawing.

In (b) of FIG. 4, it is illustrated that that when the user moves the remote control device 200 to the left, the pointer 205 displayed on the display unit 180 of the display device moves to the left correspondingly.

Information on the movement of the remote control device 200 detected through a sensor of the remote control device 200 is transmitted to the display device. The display device may calculate the coordinates of the pointer 205 based on information on the movement of the remote control device 200. The display device may display the pointer 205 to correspond to the calculated coordinates.

In (c) of FIG. 4, it is illustrated that a user moves the remote control device 200 away from the display unit 180 while pressing a specific button in the remote control device 200. Accordingly, a selected region in the display unit 180 corresponding to the pointer 205 may be zoomed in and displayed to be enlarged. Conversely, when the user moves the remote control device 200 close to the display unit 180, the selected region in the display unit 180 corresponding to the pointer 205 may be zoomed out and displayed to be reduced. On the other hand, when the remote control device 200 moves away from the display unit 180, the selected region may be zoomed out, and when the remote control device 200 moves close to the display unit 180, the selected region may be zoomed in.

Meanwhile, in a state in which a specific button in the remote control device 200 is being pressed, recognition of up, down, left, or right movements may be excluded. That is, when the remote control device 200 moves away from or close to the display unit 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

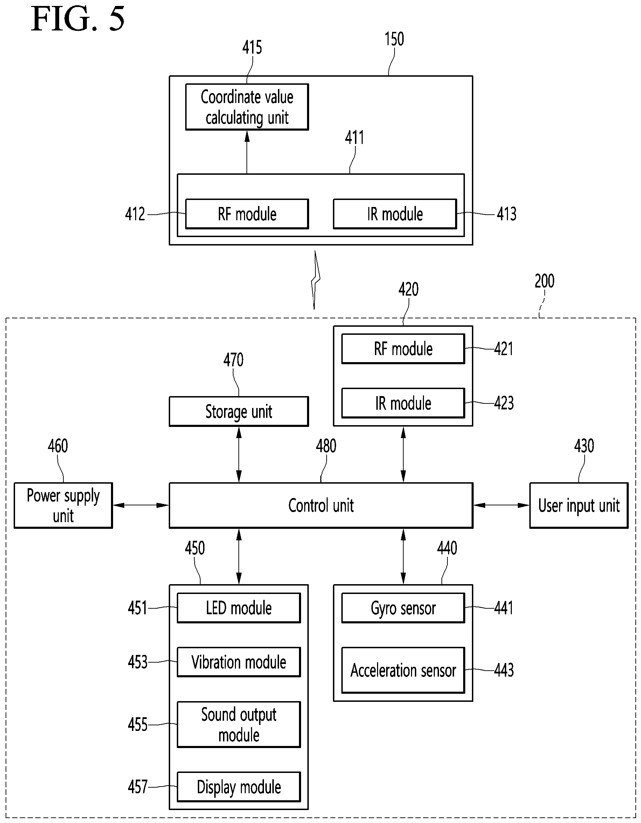

FIG. 5 is an internal block diagram of the remote control device of FIG. 2.

Referring to the drawing, the remote control device 200 may include a wireless communication unit 420, a user input unit 430, a sensor unit 440, an output unit 450, a power supply unit 460, a storage unit 470, ad a controller 480.

The wireless communication unit 420 may transmit and receive signals to and from any one of the display devices according to the embodiments of the present disclosure described above. Among the display devices according to embodiments of the present disclosure, one display device 100 will be described as an example.

In the present embodiment, the remote control device 200 may include an RF module 421 capable of transmitting and receiving signals to and from the display device 100 according to the RF communication standard. In addition, the remote control device 200 may include an IR module 423 capable of transmitting and receiving signals to and from the display device 100 according to the IR communication standard.

In the present embodiment, the remote control device 200 transmits a signal containing information on the movement of the remote control device 200 to the display device 100 through the RF module 421.

Also, the remote control device 200 may receive a signal transmitted by the display device 100 through the RF module 421. In addition, the remote control device 200 may transmit a command regarding power on/off, channel change, volume adjustment, or the like to the display device 100 through the IR module 423 as necessary.

The user input unit 430 may include a keypad, a button, a touch pad, or a touch screen. The user may input a command related to the display device 100 to the remote control device 200 by operating the user input unit 430. When the user input unit 430 includes a hard key button, the user may input a command related to the display device 100 to the remote control device 200 through a push operation of the hard key button. When the user input unit 430 includes a touch screen, the user may input a command related to the display device 100 to the remote control device 200 by touching a soft key of the touch screen. In addition, the user input unit 430 may include various types of input means that may be operated by a user, such as a scroll key or a jog key, and the present embodiment does not limit the scope of the present disclosure.

The sensor unit 440 may include a gyro sensor 441 or an acceleration sensor 443. The gyro sensor 441 may sense information on the movement of the remote control device 200.

For example, the gyro sensor 441 may sense information on the operation of the remote control device 200 based on the x, y, and z axes. The acceleration sensor 443 may sense information on the movement speed of the remote control device 200 and the like. Meanwhile, a distance measurement sensor may be further provided, whereby a distance to the display unit 180 may be sensed.

The output unit 450 may output a video or audio signal corresponding to the operation of the user input unit 430 or a signal transmitted from the display device 100. The user may recognize whether the user input unit 430 is operated or whether the display device 100 is controlled through the output unit 450.

For example, the output unit 450 may include an LED module 451 that emits light, a vibration module 453 that generates vibration, a sound output module 455 that outputs sound, or a display module 457 that outputs a video when the user input unit 430 is operated or a signal is transmitted and received through the wireless communication unit 420.

The power supply unit 460 supplies power to the remote control device 200. The power supply unit 460 may reduce power consumption by stopping power supply when the remote control device 200 has not moved for a predetermined time. The power supply unit 460 may restart power supply when a predetermined key provided in the remote control device 200 is operated.

The storage unit 470 may store various types of programs and application data required for control or operation of the remote control device 200. When the remote control device 200 transmits and receives signals wirelessly through the display device 100 and the RF module 421, the remote control device 200 and the display device 100 transmit and receive signals through a predetermined frequency band. The controller 480 of the remote control device 200 may store and refer to information on a frequency band capable of wirelessly transmitting and receiving signals to and from the display device 100 paired with the remote control device 200 in the storage unit 470.

The controller 480 may control all matters related to the control of the remote control device 200. The controller 480 may transmit a signal corresponding to a predetermined key operation of the user input unit 430 or a signal corresponding to the movement of the remote control device 200 sensed by the sensor unit 440 through the wireless communication unit 420.

The user input interface unit 150 of the display device 100 may include a wireless communication unit 411 capable of wirelessly transmitting and receiving signals to and from the remote control device 200, and a coordinate value calculating unit 415 capable of calculating coordinate values of a pointer corresponding to the operation of the remote control device 200.

The user input interface unit 150 may transmit and receive signals wirelessly to and from the remote control device 200 through the RF module 412. In addition, signals transmitted by the remote control device 200 according to the IR communication standard may be received through the IR module 413.

The coordinate value calculating unit 415 may correct a hand shake or an error based on a signal corresponding to the operation of the remote control device 200 received through the wireless communication unit 411, and calculate the coordinate values (x, y) of the pointer 205 to be displayed on the display unit 180.

The transmission signal of the remote control device 200 input to the display device 100 through the user input interface unit 150 may be transmitted to the controller 170 of the display device 100. The controller 170 may determine information on the operation and key operation of the remote control device 200 based on the signal transmitted by the remote control device 200, and control the display device 100 in response thereto.

As another example, the remote control device 200 may calculate pointer coordinate values corresponding to the operation and output the same to the user input interface unit 150 of the display device 100. In this case, the user input interface unit 150 of the display device 100 may transmit information on the received pointer coordinate values to the controller 170 without a separate process of correcting a hand shake or error.

In addition, as another example, the coordinate value calculating unit 415 may be provided in the controller 170 instead of the user input interface unit 150 unlike the drawing.

FIG. 5 is an internal block diagram of the display unit of FIG. 2.

Referring to the drawing, the display unit 180 based on an organic light emitting panel may include a panel 210, a first interface unit 230, a second interface unit 231, a timing controller 232, a gate driving unit 234, a data driving unit 236, a memory 240, a processor 270, a power supply unit 290, and the like.

The display unit 180 may receive a video signal Vd, first DC power V1, and second DC power V2, and display a predetermined video based on the video signal Vd.

Meanwhile, the first interface unit 230 in the display unit 180 may receive the video signal Vd and the first DC power V1 from the controller 170.

Here, the first DC power supply V1 may be used for the operation of the power supply unit 290 and the timing controller 232 in the display unit 180.

Next, the second interface unit 231 may receive the second DC power V2 from the external power supply unit 190. Meanwhile, the second DC power V2 may be input to the data driving unit 236 in the display unit 180.

The timing controller 232 may output a data driving signal Sda and a gate driving signal Sga based on the video signal Vd.

For example, when the first interface unit 230 converts the input video signal Vd and outputs the converted video signal va1, the timing controller 232 may output the data driving signal Sda and the gate driving signal Sga based on the converted video signal va1.

The timing controller 232 may further receive a control signal, a vertical synchronization signal Vsync, and the like, in addition to the video signal Vd from the controller 170.

In addition, the timing controller 232 may output the gate driving signal Sga for the operation of the gate driving unit 234 and the data driving signal Sda for operation of the data driving unit 236 based on a control signal, the vertical synchronization signal Vsync, and the like, in addition to the video signal Vd.

In this case, the data driving signal Sda may be a data driving signal for driving of RGBW subpixels when the panel 210 includes the RGBW subpixels.

Meanwhile, the timing controller 232 may further output the control signal Cs to the gate driving unit 234.

The gate driving unit 234 and the data driving unit 236 may supply a scan signal and the video signal to the panel 210 through a gate line GL and a data line DL, respectively, according to the gate driving signal Sga and the data driving signal Sda from the timing controller 232. Accordingly, the panel 210 may display a predetermined video.

Meanwhile, the panel 210 may include an organic light emitting layer and may be arranged such that a plurality of gate lines GL intersect a plurality of data lines DL in a matrix form in each pixel corresponding to the organic light emitting layer to display a video.

Meanwhile, the data driving unit 236 may output a data signal to the panel 210 based on the second DC power supply V2 from the second interface unit 231.

The power supply unit 290 may supply various levels of power to the gate driving unit 234, the data driving unit 236, the timing controller 232, and the like.

The processor 270 may perform various control of the display unit 180. For example, the gate driving unit 234, the data driving unit 236, the timing controller 232 or the like may be controlled.

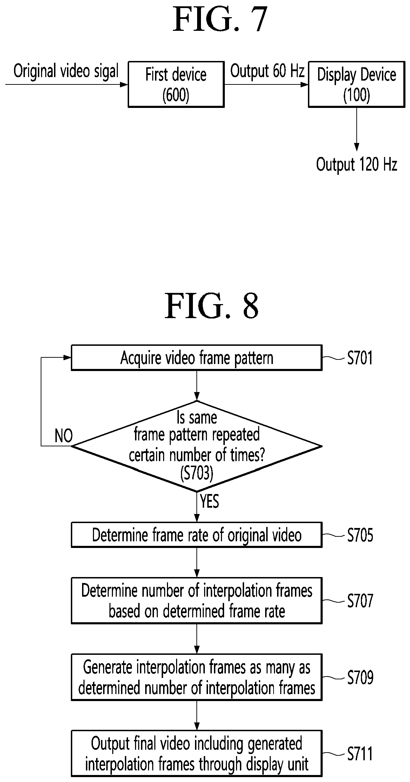

FIG. 7 is a diagram describing a video output relationship between a first device and a display device according to an embodiment of the present disclosure.

A first device 600 may transmit a video signal received from an outside to the display device 100. The external device interface unit 135 of the display device 100 may receive a video signal from the first device 600.

Here, the first device 600 is an external device connectable to the external device interface unit 135 described above, and may be a device that provides a video having a first frequency or converts a video having a first frequency and outputs the video as a video having a second frequency.

An Example of the first device 600 may be any one of a set-top box, a Blu-ray player, a DVD player, a game console, a sound bar, a smartphone, a PC, a USB memory, and a home theater.

Meanwhile, the first device 600 may be a video receiving device built in the display device 100. At this time, the first device 600 may be connected to the external device interface unit 135, but may also be directly connected to the controller 170 in some cases. In some cases, the first device 600 may be located inside the processor that implements the controller 170.

The video signal may be any one of a broadcast signal, a content video signal received from an external server, and a video signal received from a connected external device.

The video signal received from the outside by the first device 600 is called an original video signal.

The frequency of the original video signal may be any one of 24 Hz, 25 Hz, 30 Hz, and 60 Hz, but this is merely an example.

The first device 600 may convert a specific frequency of the original video signal to 60 Hz and output the converted 60 Hz video signal.

The first device 600 may convert the frame rate of the original video signal input from the outside to 60 Hz.

That is, the output frequency of the video signal output by the first device 600 may be fixed to 60 Hz. Here, 60 Hz is only an example.

The process by which the first device 600 converts the frequency of the original video signal to 60 Hz may be called pull-down.

The display device 100 may determine the frame rate of the original video based on the 60 Hz video signal received from the first device 600.

The display device 100 may determine the number of interpolation frames based on the determined frame rate.

The display device 100 may output video through the display unit 180 using the determined number of interpolation frames.

FIG. 8 is a flowchart for describing an operation method of the display device according to an embodiment of the present disclosure.

The frequency described below may mean a scan rate of an image.

The input frequency may be a driving frequency of an image signal output by the first device 600 connected through the external device interface unit 135.

The output frequency may indicate a driving frequency of an image signal when the display unit 180 outputs an image signal.

It is assumed that the image output frequency of the display panel 180 is set to a first output frequency. The first output frequency may be 120 Hz.

The controller 170 of the display device 100 obtains a video frame pattern based on a video signal received from the first device 600 (step S701), and determines whether the same video frame pattern is repeated a predetermined number of times based on the obtained video frame pattern (Step S703).

The frequency of the video signal received from the first device 600 may be 60 Hz, but this is merely an example. That is, the output frequency of the first device 600 may be 60 Hz.

The external device interface unit 135 of the display device 100 may include an HDMI (High-Definition Multimedia Interface) terminal.

The external device interface unit 135 may receive a video signal through an external device connected through the HDMI terminal.

In one embodiment, the video frame pattern may be a pattern obtained based on the number of repetitions of the same video frame. The video frame pattern may also be named a video cadence.

The video cadence may be a pattern in which the repetition of video frames is expressed as a ratio. The video cadence may represent a repetition flow of input video frames.

For example, in the case that the first video frame is detected 3 times, and then the second video frame is detected 2 times, the video frame pattern may be obtained as 3:2.

As another example, in the case that the first video frame is detected 4 times, the second video frame is detected 2 times, the third video frame is detected 2 times, and the fourth video frame is detected 2 times, the video frame pattern may be 4:2:2:2.

The following describes a process for obtaining a video frame pattern.

As an example, the controller 170 of the display device 100 may calculate the difference between a video frame and a video frame following it.

In one embodiment, the controller 170 may calculate the SAD (Sum of Absolute Difference) between consecutive video frames. The SAD may be a sum value that adds up the differences between pixel values of each of the consecutive video frames.

The controller 170 may distinguish whether two consecutive frames are the same frame or different frames based on the calculation result.

In the case that the SAD is less than a preset value, the controller 170 may determine that two consecutive frames are the same frame.

In the case that the SAD is greater than or equal to a preset value, the controller 170 may determine that two consecutive frames are different frames.

The controller 170 may obtain a video frame pattern based on the distinction result.

The controller 170 may obtain a video frame pattern representing a repeating pattern of video frames based on the distinction result.

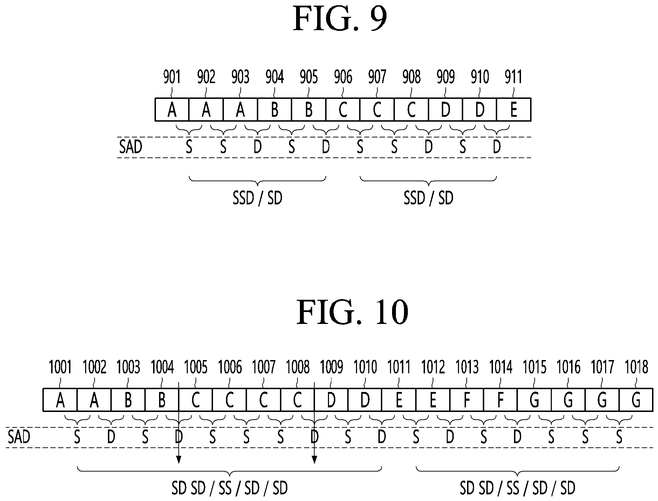

This will be described with reference to FIGS. 9 and 10.

FIGS. 9 and 10 are diagrams describing a process of obtaining a video frame pattern using SAD according to an embodiment of the present disclosure.

First, FIG. 9 will be described.

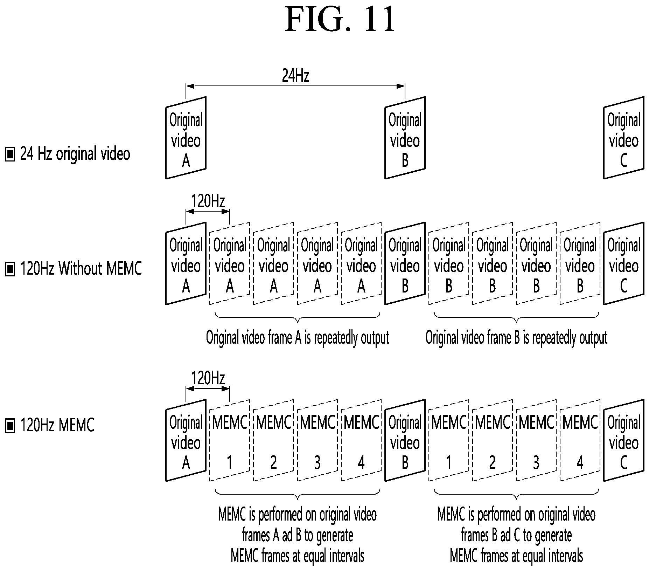

Referring to FIG. 9, 11 video frames 901 to 911 output from the first device 600 are illustrated.

The controller 170 of the display device 100 may calculate the SAD between two consecutive frames.

Based on the calculation result, the controller 170 may determine whether the two frames are the same frame or different frames.

In FIG. 9, S (abbreviation for Same) may mean that two frames are determined to be the same frame, and D (abbreviation for Different) may mean that two frames are determined to be different frames.

The first to third video frames 901 to 903 may be determined to be the same frame A, the fourth and fifth video frames 904 and 905 may be determined to be the same frame B, the sixth to eighth video frames 906 to 908 may be determined to be the same frame C, and the ninth and tenth video frames 909 and 910 may be determined to be the same frame D.

The controller 170 may obtain a video frame pattern using the calculated 10 SADs.

The controller 170 may obtain the result of SSD/SD as a 3:2 pattern.

Meanwhile, the controller 170 may determine 3:2 as a video frame pattern because the SSD/SD pattern is repeated twice consecutively.

Next, FIG. 10 will be described.

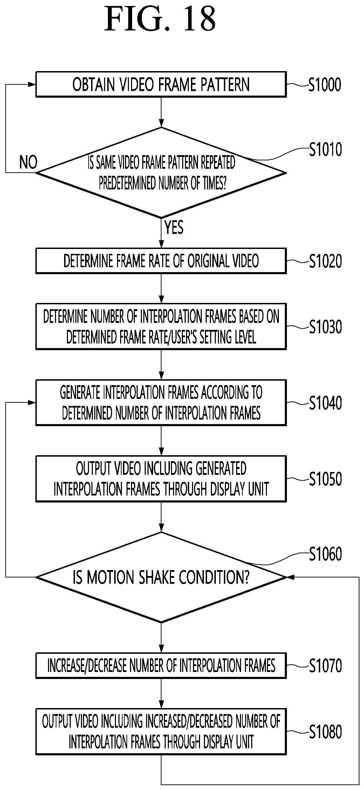

Referring to FIG. 10, 18 video frames 1001 to 1019 output from the first device 600 are illustrated.

The controller 170 of the display device 100 may calculate the SAD between two consecutive frames.

The controller 170 may determine whether the two frames are the same frame or different frames based on the calculation result.

In FIG. 10, S (abbreviation for Same) may mean that the two frames are determined to be the same frame, and D (abbreviation for Different) may mean that the two frames are determined to be different frames.

It may be determined that the first and second video frames 1001 and 1002 are identical frames A, the third and fourth video frames 1003 and 1004 are identical frames B, the fifth to eighth video frames 1005 to 1008 are identical frames C, the ninth and tenth video frames 1009 and 1010 are identical frames D, the eleventh and twelfth video frames 1011 and 1012 are identical frames E, the thirteenth and fourteenth video frames 1013 and 1014 are identical frames F, and the fifteenth to eighteenth video frames 1015 to 1018 are identical frames G.

The controller 170 may obtain the video frame pattern using the calculation result of SAD.

The first four video frame patterns are determined as SD/SD, but since various types of cadences may appear thereafter, the SAD values between the following frames are examined further.

In the case that the controller 170 determines that the pattern of SDSD/SS/SD/SD is repeated twice, the video frame pattern may be determined as 4:2:2:2.

Again, FIG. 8 will be described.

The number of times may be 2, but this is only an example.

For example, the controller 170 may determine whether the video frame pattern of 3:2 is repeated twice.

The controller 170 may determine the frame rate of the original video corresponding to the repeated frame pattern when the same video frame pattern is repeated a predetermined number of times (step S705).

The controller 170 may determine the frame rate of the original video based on the cadence combination table stored in the storage unit 140 when the video frame pattern is repeated a predetermined number of times.

The cadence combination table may be a table that matches the video frame pattern between the frequency of the original video and the output frequency. Here, the output frequency may be the frequency of the video signal output from the first device 600.

The controller 170 may extract the frequency of the original video corresponding to the repeated video frame pattern and the output frequency from the cadence combination table. The controller 170 may determine the extracted frequency of the original video as the frame rate of the original video.

As described in FIG. 9, in the case that the controller 170 determines the video frame pattern of the original video to be 3:2, the frequency of the original video may be determined to be 24 Hz.

That is, in the case that the cadence is 3:2, the controller 170 may determine the input frequency of the original video corresponding to it to be 24 Hz by referring to the cadence combination table.

As another example, in the case that the cadence is 2:2, the controller 170 may determine the input frequency of the original video corresponding to it to be 30 Hz by referring to the cadence combination table.

Again, FIG. 8 is described.

The controller 170 may determine the number of interpolation frames based on the determined frame rate of the original video (step S707).

In one embodiment, the controller 170 may generate interpolation frames to compensate for the difference in the frequency of the original video signal and the frequency of the video signal to be output through the display unit 180 of the display device 100.

The controller 170 may generate interpolation frames by performing a motion processing process based on the original video frames constituting the original video.

The motion processing process may be a motion estimation/motion compensation (MEMC) process.

Motion estimation (ME) may be a method of predicting a current block by dividing a video frame into multiple small blocks and estimating which block of a previous frame or a future pre-coded frame of the current video frame has moved from.

Motion compensation (MC) may be a method of compensating for the difference between a predicted value and an actual value to compensate for the inaccuracy of motion estimation.

The controller 170 may calculate the number of interpolation frames required for the motion processing process using the frame rate of the original video.

The controller 170 may generate interpolation frames equal to the determined number of interpolation frames (step S709) and output a final video including the generated interpolation frames through the display unit 180 (step S711).

Steps S707 to S711 will be described with reference to the drawings below.

FIG. 11 is a diagram describing a method of generating frames through MEMC according to an embodiment of the present disclosure.

It is assumed that the frequency of the original video is 24 Hz and the output frequency of the display device 100 is 120 Hz.

The original video may be input at a frame rate of 24 frames per second.

In the case that the MEMC process is not performed, the display device 100 repeats the original video frame A four times. This is because the frequency of the original video and the output frequency of the display device 100 differ by 5 times.

In the case that the MEMC process is performed, the display device 100 may generate four MEMC frames MEMC 1, MEMC 2, MEMC 3, and MEMC 4 that have undergone the MEMC process using the original video frame A and the original video frame B that follows the original video frame A.

Since the MEMC frame is generated between two video frames, the MEMC frame may be named an interpolation frame.

When using the MEMC process, the video output through the display device 100 may feel more natural than when the MEMC process is not used.

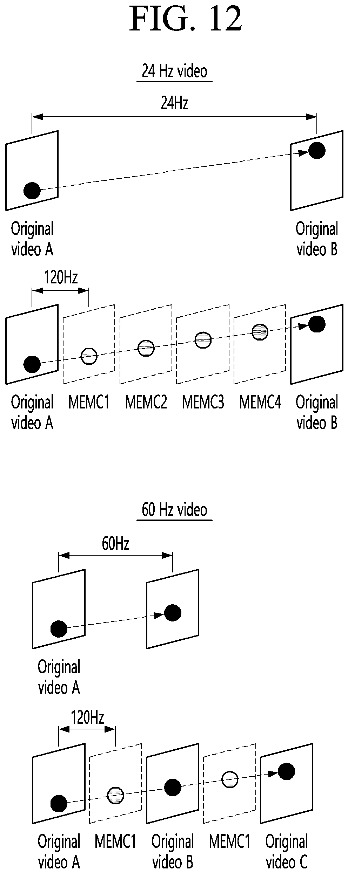

FIG. 12 is a diagram describing that the number of generated interpolation frames is different when the frequency of the original video is different.

Referring to FIG. 12, the case where the frequency of the original video is 24 Hz and the case where the frequency of the original video is 60 Hz are compared and explained. In FIG. 12, it is assumed that the output frequency of the display device 100 is 120 Hz.

When the frequency of the original video is 24 Hz, the display device 100 may generate four MEMC frames between two original video frames A and B.

When the frequency of the original video is 60 Hz, the display device 100 may generate one MEMC frame between two original video frames A and B.

That is, the number of interpolated frames to be generated may vary depending on whether the frequency of the original video varies in the display device 100.

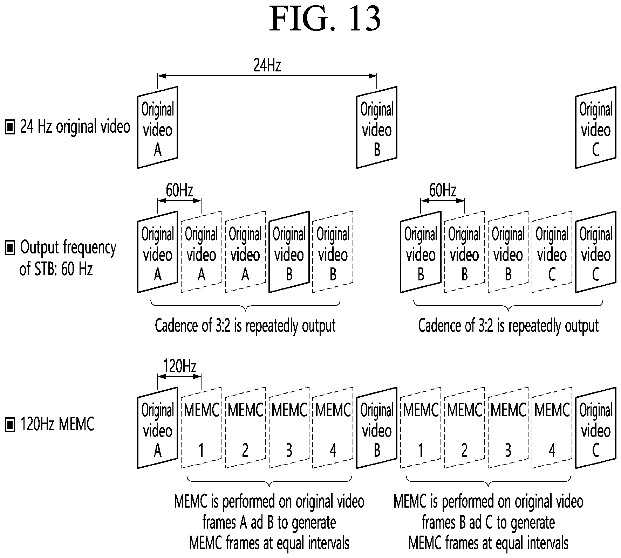

FIG. 13 is a diagram illustrating a process of determining a frame rate of an original video and generating interpolated frames based on the frame rate according to an embodiment of the present disclosure.

Referring to FIG. 13, the frequency of the original video is 24 Hz. After the original video is input to the first device 600, the first device 600 may convert or pull-down the frequency of the original video to 60 Hz and output it.

The first device 600 may output video frames having a cadence of 3:2.

The display device 100 may calculate the cadence of the original video based on the 60 Hz video frames output from the first device 600. This is as described in FIG. 9 and FIG. 10.

The display device 100 may determine the frequency of the original video as 24 Hz, and may determine the number of MEMC frames based on the determined frequency of the original video.

Since the display device 100 has its own output frequency of 120 Hz and the frequency of the original video is 24 Hz, the display device 100 may generate four interpolation frames MEMC 1 to 4 per one original video frame.

As described above, when using the MEMC process, the video output through the display device 100 may feel more natural compared to when the MEMC process is not used.

At this time, the degree of naturalness may vary depending on the situation. For example, the degree of naturalness of the screen may vary depending on the user's setting level. For example, when a user watches a movie, the user may want to feel the same vividness as the movie even when watching it on the display device 100. Meanwhile, the user may want a natural image in which the shaking of the motion is not greatly felt in the image. In some cases, the user may want a smoother-feeling image. For example, the user may set a "smooth/natural/cinematic" image. Accordingly, the number of interpolation frames inserted in the MEMC process may be changed. That is, the number of interpolation frames determined according to the frequency of the video described above or generated by considering the frequency of the video may be changed.

In this way, the user may change the level De-judder level that alleviates the shaking of such motion. Hereinafter, the degree to which the shaking of such motion is alleviated may be referred to as the De-judder level.

On the other hand, even if the user sets one De-judder level, the shaking of the motion may be felt differently depending on the scene. For example, in the case that the user sets a "cinematic" De-judder level to watch a movie vividly, there are cases where the user feels strong shaking in a specific scene.

For example, when an image video pans in one direction, when the movement is fast, the viewer user who sees the image brighter may feel the shaking more. In other words, the shaking may be felt differently depending on the property of the image.

Therefore, according to the present disclosure, in normal movement motion, the De-judder level is maintained by the user's setting method or the basic setting of the display device, but when the property of the screen satisfy a specific condition, the shaking level may be changed to make the image feel rougher or smoother. This will be described in detail later with reference to the drawings.

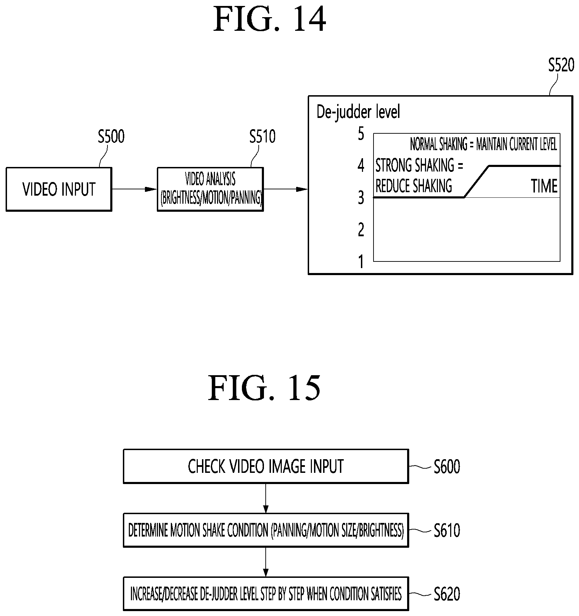

FIG. 14 is a schematic diagram describing a process of changing the degree of motion shaking according to a scene by analyzing the property of a video according to one embodiment of the present disclosure. In addition, FIG. 15 is a flowchart showing the operation process of the display device according to one embodiment of the present disclosure.

This operation process of the display device may be performed by the controller 170. For example, a video image input through the first device 600 or a video image directly input to the controller 170 may be processed by the controller 170. The following operations are described with an example of processing by the controller 170.

Referring to FIG. 14, first, the controller 170 may receive a video image input. For example, a video input condition may be checked.

For example, the controller 170 may receive a video having a first frequency from the first device 600 through the external device interface unit 135.

The controller 170 may determine the number of interpolation frames generated to output the original video having the first frequency as a final video having the second frequency through the display unit 180 and generate interpolation frames equal to the determined number of interpolation frames.

The controller 170 may check the video input (step S500). For example, the controller 170 may check the condition such as a motion size, an average motion speed, and a video brightness in the current frame.

Afterwards, the controller 170 may analyze (determined) whether the property of the original video satisfy the conditions related to the degree of motion shake (step S510). Accordingly, the controller 170 may maintain or change the De-judder level related to the degree of motion shake at the current state (step S520).

For example, the controller 170 may maintain or change the number of interpolation frames based on whether the property of the original video satisfy the conditions related to the degree of motion shake.

Here, the number of interpolation frames determined may be determined according to the user's setting level. For example, the current setting level set by the user may correspond to De-judder level 3. The number of interpolation frames according to this may be predetermined. Here, the De-judder level may also be referred to as the motion shake level.

The condition related to the motion shake may include a first condition indicating whether panning of the video occurs.

The condition related to the motion shake may include a second condition indicating whether the motion speed of the video is greater than or equal to a preset value.

The condition related to the motion shake may include a third condition indicating whether the brightness of the video is greater than or equal to a preset value.

In the case that it is determined that it is a normal shaking that is not related to the first to third conditions, the controller 170 may maintain the De-judder level at the current level.

Meanwhile, as an exemplary embodiment, the controller 170 may determine that a situation occurs in which strong shaking occurs in the case that the property of the original video is related to at least one of the first to third conditions. Accordingly, the controller 170 may reduce the shaking of the motion by increasing the De-judder level.

As described above, considering the characteristics of the video, the De-Judder level may be increased in a scene in which shaking judder is greatly perceived to reduce the visual shaking. Accordingly, the viewer may reduce the discomfort when watching the video.

Referring to FIG. 15, similar to the description described with reference to FIG. 14, first, the controller 170 may receive a video image input (step S600). For example, the video input condition may be checked. This process may be performed initially or periodically during the process of playing the video image.

After that, it is possible to determine whether the characteristics of the original video satisfy the condition related to the degree of motion shake (step S610). The condition related to the motion shake may include at least one of the occurrence of panning of the video, the motion speed motion size of the video, or the brightness of the video.

Accordingly, the controller 170 may maintain the De-judder level related to the motion shake in the current state or increase or decrease it step by step (step S620).

Such a process (steps S600 to S620) may be performed after step S711 of FIG. 8.

Here, panning generally refers to a method of filming while moving from left to right or right to left with an appropriate amount of time while fixing the position of the camera. In the case that only a limited location is shown and filmed, it may cause the viewer to feel bored, so it is a cinematic technique that may show all the desired scenes by using the panning technique.

However, when such panning occurs, the viewer may feel strong shaking. Therefore, when panning is detected, the De-judder level may be reduced.

Such panning may correspond to a case where the motion action remains the same for consecutive frames. This may correspond to a case where the difference between the consecutive frame average motion value mv_avg and the current frame motion value mv is small. That is, when the difference between the consecutive frame average motion value mv_avg and the current frame motion value mv is within a predetermined threshold, the controller 170 may determine that it is a panning state and reduce the De-judder level.

Meanwhile, when the size of the motion the speed of the motion is within a predetermined range, the controller 170 may reduce the De-judder level. In addition, even when the brightness is large, the user may feel the shaking of the motion more. Therefore, in the case that the brightness of the video is greater than a predetermined threshold value, the controller 170 may reduce the De-judder level.

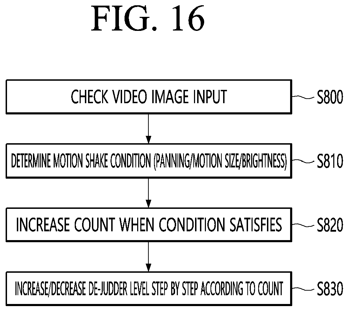

FIG. 16 is a flowchart showing the operation process of the display device according to another embodiment of the present disclosure.

Referring to FIG. 16, first, the controller 170 may check the video image input (step S800). For example, the video input condition may be checked. This process may be performed initially or periodically during the process of playing the video image.

Afterwards, it may be determined whether the property of the original video satisfy the condition related to the degree of motion shake (step S810). The condition related to the motion shake may include at least one of whether panning of the video occurs, the motion speed motion size of the video, and the brightness of the video.

In the case that any of the following conditions are met as a result of the judgment: whether panning of the video occurs, whether the motion speed motion size of the video is within a predetermined range, and whether the brightness of the video is greater than a threshold value, the count may be increased (step S820).

Thereafter, the controller 170 may maintain the De-judder level related to the shake of the motion in the current state or increase or decrease it step by step according to the count (step S830). For example, the controller 170 may improve the shake of the screen by changing the De-judder level or generating interpolation frames with a number smaller than the difference in the number of interpolation frames corresponding to each De-judder level interval.

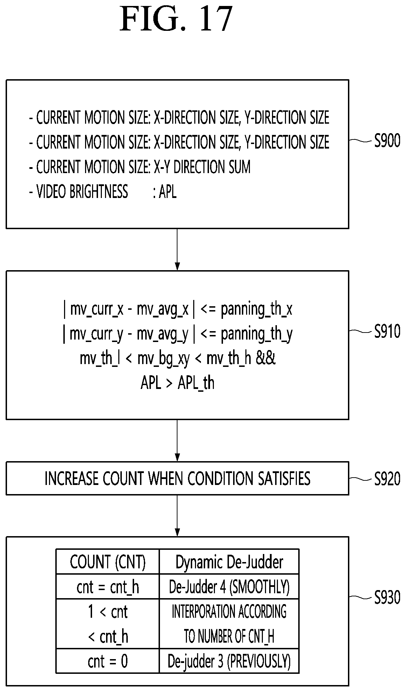

FIG. 17 is a flowchart illustrating the operation process of the display device according to another embodiment of the present disclosure in more detail.

Referring to FIG. 17, first, the controller 170 may check the video image input (step S900). For example, the video input condition may be checked. The video input condition may include the current motion size mv_curr, the frame motion average mv_avg, the current motion size mv_bg_xy; sum by direction, the video brightness APL, and the like.

Here, the current motion size mv_curr may include the x-direction size and the y-direction size. The frame motion average mv_avg may include the x-direction average and the y-direction average values.

Thereafter, it may be determined whether the property of the original video satisfy the condition related to the degree of the motion shake (step S910). The condition related to the motion shake may include at least one of whether panning of the video occurs, the motion speed motion size of the video, and the brightness of the video.

The controller 170 may maintain or change the number of interpolated frames based on whether the property of the original video satisfy the condition related to the degree of motion shake.

The condition related to the degree of motion shake may include at least one of a first condition indicating whether panning of the video occurs, a second condition indicating whether the motion speed of the video is within a preset value, and a third condition indicating whether the brightness APL of the video is greater than a preset value APL_th.

For example, the first condition may correspond to whether the absolute value of the current video's x-direction motion speed mv_curr_x - average x-direction motion speed mv_avg_x is equal to or less than the x threshold panning_th_x, and whether the absolute value of the current video's y-direction motion speed mv_curr_y - average y-direction motion speed mv_avg_y is equal to or less than the y threshold panning_th_y.

Here, the second condition may include whether the video's motion speed mv_bg_xy; sum by direction is within a preset value mv_th_l < mv_bg_xy < mv_th_h.

In the case that any one of the first condition, the second condition, and the third condition is satisfied, the controller 170 may increase the count cnt (step S920).

As an exemplary embodiment, the controller 170 may assign a weight to at least one of the first condition, the second condition, and the third condition. For example, in the case that a weight value is assigned to the first condition corresponding to panning, when a situation corresponding to the first condition occurs, the count may be increased to a value greater than 1.

The controller 170 may maintain the De-judder level related to the shaking of the motion in the current state or increase or decrease it step by step according to the count cnt (step S930).

As an example, the controller 170 may change the De-judder level or generate interpolation frames with a number smaller than the difference in the number of interpolation frames corresponding to each De-judder level interval to improve the degree of shaking of the screen.

FIG. 18 is a flowchart illustrating the operation process of a display device according to one embodiment of the present disclosure.

Referring to FIG. 18, the controller 170 of the display device 100 obtains a video frame pattern based on the video signal received from the first device 600 (step S1000), and determines whether the same video frame pattern is repeated a predetermined number of times based on the obtained video frame pattern (step S1010).

In the case that the same video frame pattern is repeated a predetermined number of times, the controller 170 may determine the frame rate of the original video corresponding to the repeated frame pattern (step S1020).

The controller 170 may determine the number of interpolation frames based on the determined frame rate of the original video and/or the user's setting level (step S1030).

The controller 170 may generate interpolation frames equal to the determined number of interpolation frames (step S1040), and output a final video including the generated interpolation frames through the display unit 180 (step S1050).

Afterwards, it may be determined whether the property of the original video satisfy the condition related to the degree of motion shake (step S1060). The condition related to the motion shake may include at least one of the occurrence of panning of the video, the motion speed motion size of the video, or the brightness of the video. This condition determination may be performed in real time while the video is output.

Accordingly, the controller 170 may increase/decrease the number of interpolation frames (step S1070). For example, the controller 170 may maintain the De-judder level related to the motion shake at the current state or increase/decrease it step by step.

Afterwards, the video including the increased number of interpolation frames may be output through the display unit 180 (step S1080).

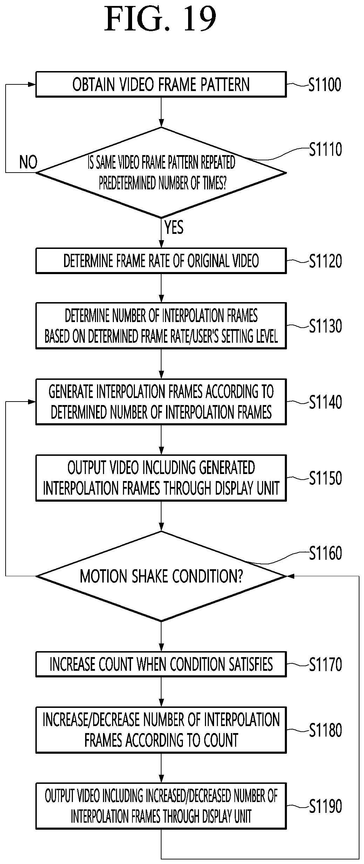

FIG. 19 is a flowchart illustrating the operation process of a display device according to another embodiment of the present disclosure.

Referring to FIG. 19, the controller 170 of the display device 100 obtains a video frame pattern based on a video signal received from the first device 600 (step S1100), and determines whether the same video frame pattern is repeated a predetermined number of times based on the obtained video frame pattern (step S1110).

The controller 170 may determine the frame rate of the original video corresponding to the repeated frame pattern when the same video frame pattern is repeated a predetermined number of times (step S1120).

The controller 170 may determine the number of interpolation frames based on the determined frame rate of the original video and/or the user's setting level (step S1130).

The controller 170 may generate interpolation frames equal to the determined number of interpolation frames (step S1140) and output the final video including the generated interpolation frames through the display unit 180 (step S1150).

Thereafter, the controller 170 may determine whether the property of the original video satisfies the condition related to the degree of motion shake (step S1160). The condition related to the motion shake may include at least one of whether panning of the video occurs, the motion speed motion size of the video, or the brightness of the video. This conditional determination may be performed in real time while the video is output.

In the case that any one of the determination results, whether panning of the video occurs, whether the motion speed motion size of the video is within a predetermined range, and whether the brightness of the video is greater than a threshold value, is satisfied, the count may be increased (step S1170).

Thereafter, the controller 170 may stepwise increase or decrease the number of interpolation frames according to the count (step S1180). For example, the controller 170 may maintain the De-judder level related to the motion shake as the current state or stepwise increase or decrease it. For example, the controller 170 may improve the degree of shaking of the screen by changing the De-judder level or generating interpolation frames with a number smaller than the difference in the number of interpolation frames corresponding to each De-judder level interval.

After that, a video including an increased number of interpolation frames may be output through the display unit 180 (step S1190).

For example, a specific scene of the video may be described. First, in a section where the video starts to move slowly, for example, the motion size and brightness condition may meet the count increase condition, but panning may occur and the panning condition may not be met. At this time, the De-judder level 3 level may be maintained.

In the following scene, panning may begin as the speed of the motion gradually increases. At this time, the motion size and brightness conditions may meet and the panning condition may also meet. Then, the De-judder level 3 may slowly increase and vary from level 4. Accordingly, the shaking of the motion may begin to decrease.

In the following scene, panning may continuously occur at a constant speed. Then, the motion size, brightness, and panning conditions may continue to meet. In this case, the De-judder level 4 level may be maintained. Accordingly, the shaking of the movement may be reduced.

According to an embodiment of the present disclosure, the above-described method may be implemented as a processor-readable code on a medium in which a program is recorded. Examples of the processor-readable medium include ROM, RAM, CD-ROM, magnetic tape, floppy disk, optical data storage device, and the like, and also includes one implemented in the form of a carrier wave (e.g., transmission via the Internet).

The display device described above is not limited to the configuration and method of the embodiments described above, and the embodiments may be configured by selectively combining all or part of each embodiment so that various modifications may be made.

## Claims

1. A display device comprising:
a display unit;
an external device interface unit configured to receive a video having a first frequency from a first device; and
a controller configured to:
determine a number of interpolation frames generated to output an original video having a first frequency as a final video having a second frequency through the display unit based on the video having the first frequency, and generate interpolation frames as many as the determined number of interpolation frames, and
change the number of interpolation frames based on whether a property of the original video satisfies a condition related to a degree of motion shake.

2. The display device of claim 1, wherein the controller is configured to:
determine the number of interpolation frames according to a user's setting level.

3. The display device of claim 2, wherein the condition related to the degree of motion shake includes a first condition indicating whether panning of the video occurs.

4. The display device of claim 1, wherein,
the first condition corresponds to whether an absolute value of x-direction motion speed of the current video - an average x-direction motion speed is equal to or less than x threshold value, and an absolute value of y-direction motion speed - an average y-direction motion speed of the current video is equal to or less than y threshold value.

5. The display device of claim 1, wherein,
the condition related to the degree of motion shake includes a second condition indicating whether a motion speed of the video is equal to or greater than a preset value.

6. The display device of claim 1, wherein,
the condition related to the degree of motion shake includes a third condition indicating whether a brightness of the video is equal to or greater than a preset value.

7. The display device of claim 1, wherein,
the condition related to the degree of motion shake includes at least one of a first condition indicating whether panning of the video occurs, a second condition indicating whether a motion speed of the video is equal to or greater than a preset value, or a third condition indicating whether a brightness of the video is equal to or greater than a preset value.

8. The display device of claim 7, wherein the controller is configured to:
increase a count based on any one of the first condition, the second condition, and the third condition being satisfied, and maintain the number of interpolated frames according to the count or increase the number of interpolated frames in proportion to the count.

9. The display device of claim 8, wherein the controller is configured to:
provide a weight to at least one of the first condition, the second condition, and the third condition.

10. The display device of claim 1, wherein the controller is configured to:
perform a motion estimation and a motion compensation on two neighboring original video frames, and generate the interpolated frames.

11. A method of operating a display device, comprising:
receiving an original video having a first frequency;
determining a number of interpolation frames generated to output an original video having a first frequency as a final video having a second frequency through the display unit;
generating interpolation frames as many as the determined number of interpolation frames;
outputting the video including the generated interpolation frames; and
changing the number of interpolation frames based on whether a property of the original video satisfies a condition related to a degree of motion shake.

12. The method of claim 11, wherein changing the number of interpolation frames includes:
changing the number of interpolated frames when the original video satisfies a condition related to a degree of motion shake; and
outputting the video including the changed number of interpolated frames through a display unit.

13. The method of claim 11, wherein,
the condition related to the degree of motion shake includes at least one of a first condition indicating whether panning of the video occurs, a second condition indicating whether a motion speed of the video is equal to or greater than a preset value, or a third condition indicating whether a brightness of the video is equal to or greater than a preset value.

14. The method of claim 13, wherein,
the first condition corresponds to whether an absolute value of x-direction motion speed of the current video - an average x-direction motion speed is equal to or less than x threshold value, and an absolute value of y-direction motion speed - an average y-direction motion speed of the current video is equal to or less than y threshold value.

15. The method of claim 13, further comprising:
increasing a count based on any one of the first condition, the second condition, and the third condition being satisfied, and
maintaining the number of interpolated frames according to the count or increasing the number of interpolated frames in proportion to the count.
